# EUROPÄISCHE PATENTSCHRIFT

(11) **EP 1 337 196 B1**
(45) Veröffentlichungstag und Bekanntmachung des Hinweises auf die Patenterteilung: **02.03.2011**
(21) Anmeldenummer: 02743111.3
(22) Anmeldetag: 27.05.2002
(51) Int. Cl.: A61C 5/12

(54) **KOFFERDAM**
RUBBER DAM
DIGUE DENTAIRE

(30) Priorität: 30.05.2001 DE 10126179
(43) Veröffentlichungstag der Anmeldung: 27.08.2003
(73) Patentinhaber: Horvath, Domonkos, 79798 Jestetten (DE)
(72) Erfinder: Horvath, Domonkos, 79798 Jestetten (DE)
(74) Vertreter: UEXKÜLL & STOLBERG
(86) Internationale Anmeldenummer: PCT/EP2002/005793
(87) Internationale Veröffentlichungsnummer: WO 2002/096313

(56) Entgegenhaltungen:
- WO-A-98/34559
- US-A- 5 011 409
- US-A- 5 078 604

## Beschreibung

Die vorliegende Erfindung betrifft einen Kofferdam zur Isolierung eines Zahnes oder mehrerer Zähne im Mund eines Patienten gemäß dem Oberbegriff des Patentanspruchs 1.

In der zahnärztlichen Praxis besteht die Notwendigkeit, saubere und trockene Behandlungen von Zähnen durchzuführen, sowie die betreffenden Zähne zu isolieren. Zu diesem Zweck ist seit ca. 150 Jahren der sogenannte Kofferdam bekannt. Dieser besteht in seiner ursprünglichen und einfachsten Form aus einem elastischen, planen Abdeckmittel, zumeist in Form eines Gummituches, das außerhalb des Mundes in einem Rahmen befestigt ist. Zur Isolation eines oder mehrerer Zähne wird das Abdeckmittel elastisch in den Mundraum hinein und zu den betreffenden Zähnen hingedrückt. Mittels einer gezielten Perforation kann das Abdeckmittel dann über einen Zahn gezogen werden, wobei der Rand des in dem elastischen Abdeckmittel gebildeten Loches am Zahn anliegt und auf diese Weise für eine zirkuläre Abdichtung um den Zahn herum gegen Flüssigkeiten, wie zum Beispiel Speichel oder Blut, sorgt. Indem das Abdeckmittel an dem Zahn befestigt wird, wird es gegen den außerhalb des Mundes angeordneten Rahmen, in den das Abdeckmittel eingespannt ist, reziprok verankert. Die Elastizität des Abdeckmittels bewirkt, daß der Rahmen fest gegen das Gesicht gedrückt und das Abdeckmittel extraoral stabil fixiert wird. Die auftretenden starken Wandspannungen verhindern dabei, daß das Abdeckmittel während des Absaugens mit einer zahnärztlichen Absaugvorrichtung von dieser ungewollt eingesaugt wird.

Neben den genannten Aufgaben stellt dieser bekannte Kofferdam auch eine hygienische Barriere und somit einen Schutz gegen Infektionskrankheiten sowohl für den Patienten als auch für den Zahnarzt und seine Assistenten dar. Darüber hinaus bietet er einen toxischen Schutz gegen ausgebohrtes Amalgam oder vom Zahnarzt verwendete Chemikalien, wie etwa Desinfektionsmittel, und verhindert das Verschlucken oder Aspirieren von Gegenständen, wie zum Beispiel von abgebrochenen Bohrern oder von Spitzen gefährlicher Kleininstrumente. Durch die aus der Chirurgie bekannte Isolation des Operationsfeldes erleichtert der Kofferdam die Konzentration des Zahnarztes. Weitere wichtige Vorteile sind eine verkürzte Behandlungszeit, das Entfallen häufigen Spülens des Patienten, der Ausschluß feuchter Atemluft mit der Folge, daß die verwendeten rekonstruktiven Materialien physikalisch optimal verarbeitet werden können, und die Verhinderung üblen Mundgeruchs, der den Behandler belästigt.

Bei der Anwendung des beschriebenen Kofferdams nimmt das Abdeckmittel gerade bei der Behandlung der Seitenzähne und vor allem der hinteren Backenzähne Trichterform an und wird stark gespannt. Aufgrund der starken Spannung muß das Abdeckmittel im Mund an einem oder mehreren Zähnen mit Hilfe einer starken Klammer befestigt werden, wobei die Gefahr besteht, daß die betreffenden Zähne durch die Klammern irreversibel beschädigt werden. Auch bei unterschiedlichster Verankerung an dem Rahmen läßt sich die Wandspannung des Abdeckmittels nur schlecht steuern. Verankert man das Abdeckmittel nur lose an dem Rahmen, so treten störende starke Falten auf, das Abdeckmittel wird leicht in einen Sauger eingezogen und der gesamte Sitz wird infolge der schwachen Spannung labil. Will man also etwa eine störende Faltenbildung vermeiden, muß das zweidimensionale Abdeckmittel mit den genannten Folgen stark gedehnt werden. Der Zahnarzt, der - bedingt durch die Größe der Mundhöhle - ohnehin in engen räumlichen Verhältnissen komplizierte Behandlungen durchführen muß, braucht ohne Einschränkungen das anatomisch größtmögliche Platzangebot. Aufgrund der Trichterform des Abdeckmittels wird der zur Verfügung stehende Raum so drastisch reduziert, daß eine Behandlung mit zahnärztlichem Instrumentarium, wie etwa Turbinen, Spiegeln oder Saugern, unter Einsatz eines Kofferdams nur eingeschränkt möglich oder häufig sogar unmöglich ist. Diese Einschränkungen sind beispielsweise in dem Buch "Kofferdam in Theorie und Praxis", Reinhard Winkler, Quintessenz-Verlags GmbH, 1991, Seiten 47 und 56 ("angelegter Kofferdam" ) deutlich sichtbar dargestellt. Zudem wird mit dieser Isolationstechnik der gesamte Mundvorhof versperrt, überdeckt und verschlossen. Das geradlinig aus der Mundhöhle führende Abdeckmittel bietet ferner keinen Halt für Flüssigkeitsansammlungen, so daß Flüssigkeit, wenn sie nicht sofort abgesaugt wird, unkontrolliert aus dem Kofferdam und dem Mund herausläuft. Darüber hinaus bewirkt der angelegte Kofferdam ein starkes Andrücken bzw. Flachdrücken der Lippen und nicht ein gezieltes vertikales Hochdrücken, das für ein für den Zahnarzt wichtiges Abhalten der Ober- bzw. Unterlippe sorgt und die dahinterliegenden Zähne für die Behandlung freigibt. Schließlich ist die Patientenakzeptanz auch aufgrund des äußerlichen Erscheinungsbildes des angelegten Kofferdams nicht sehr groß (vgl. auch "Kofferdam in Theorie und Praxis", s.o., Abbildung 477: "Fertige Isolation").

Die genannten Probleme sind für Kofferdamsysteme, die auf der beschriebenen Funktionsweise eines trichterförmigen, reziprok verspannten Abdeckmittels zwischen Klammerzahn und extraoralem Rahmen basieren, trotz verschiedenster und zahlreicher Änderungen am Rahmen, wie etwa der Wahl einer runden oder viereckigen Form, am Abdeckmittel, wie etwa der Wahl unterschiedlicher Materialien und Stärken, und an den Klammern nicht gelöst worden. Aus diesen Gründen hat sich der Kofferdam ungeachtet der oben angeführten und vieler weiterer Vorteile in der zahnärztlichen Behandlungspraxis bisher nicht durchgesetzt. Weltweit wird er von den meisten Zahnärzten nicht oder lediglich bei gewissen Behandlungen verwendet, wie etwa bei der Endodontie aus forensischen Gründen oder bei restaurativen Behandlungen an den leicht zugänglichen Frontzähnen. Selbst in den Industrieländern liegt die Einsatzquote bei unter 10%.

Ein anderer Kofferdam ist aus US 5,340,313 bekannt. Dieser Kofferdam weist eine Ausbuchtung in der Mundhöhle auf, die die starke Spannung des Abdeckmittels überflüssig macht. Für die Freihaltung des Behandlungsraumes wird ein formstabiles Gehäuse benutzt. Gerade diese sind sehr hinderlich und werden der vielseitigen zahnärztlichen instrumentellen Behandlung überhaupt nicht gerecht. Zudem wird zur Behandlung aller Patienten eine große Form- und Größenvielfalt benötigt. Sobald formstabile Teile in die Mundhöhle eingesetzt werden, überwiegen Nachteile, wie etwa die Einschränkung der Bewegungsfreiheit und des Behandlungsraumes verbunden mit einer mangelhaften Übersichtlichkeit, eine teure Herstellung oder eine fehlende Berücksichtigung der individuellen Anatomie. Die oben beschriebenen Probleme werden durch diesen Kofferdam nur unzureichend gelöst.

In US 4,889,490 ist eine Gesichtmaske für die zahnärztliche Behandlung offenbart, die einen gewöhnlichen Photohaken aufweist, um den herum an diesem befestigte Träger angeordnet sind, auf denen eine Folie mit einer Öffnung für den Mund aufgespannt ist. Der Photohaken kann zusammengedrückt und zwischen die Lippen eingesetzt werden, so daß er nach dem Loslassen die Lippen seitlich auseinanderdrückt. Die Folie dient dazu, das Gesicht des Patienten vor herumfliegenden Teilchen oder Flüssigkeiten zu schützen. Diese Vorrichtung dient nicht zur Isolation und Trockenlegung eines oder mehrerer Zähne und drückt die Lippen lediglich seitlich auseinander, wobei auch die harte Profilierung die Behandlung stört, da die in diesem Bereich wichtige Gewebedynamik verloren geht.

US 2,680,908 beschreibt einen Kofferdam, der komplizierte formgebende Halteelemente umfaßt. Diese sind teuer in der Herstellung und weisen als formstabile Elemente die oben genannten Nachteile auf.

DE 299 06 369 U1 beschreibt eine zahnärztliche Abschirmvorrichtung mit einer Abschirmfolie, die eine der Form des Mundraumes angepaßte Mundraumausstülpung aufweist. Die Folie ist so konstruiert, daß sie spannungsfrei in den Mundraum eingelegt werden kann und auch nach dem Aufziehen der perforierten Folie über einen Zahn - abgesehen von der Aufdehnung im Bereich des zu behandelnden Zahnes - im wesentlichen spannungsfrei bleibt. Daher hält die Folie einer Absaugung nicht stand sondern kollabiert und wird eingesaugt, sobald ein Sauger in Wandnähe kommt. Um das zu verhindern wird eine Versteifung der Ausstülpung durch Materialverstärkungen oder Rippen vorgeschlagen, was aber mit einer komplizierteren und teureren Herstellung und den oben beschriebenen Nachteilen formstabiler Teile verbunden ist. Die Befestigung am Gesicht erfolgt etwa mit Hilfe elastischer Bänder, die um die Ohren gelegt werden, oder einer um den Kopf herumführenden Haltevorrichtung. Neben dem komplizierten Aufbau, der umständlichen Handhabung und einer Unbequemlichkeit für den Patienten, werden die Lippen nur angedrückt, aber nicht gezielt abgehalten. Außerdem befindet sich die entspannt in der Mundhöhle liegende Folie in Anlage an dem Gaumen und der Zunge. Das hat nicht nur den Nachteil, daß Patienten dieses tapetenartige Auskleiden des Gaumens und die eingeschränkte Beweglichkeit der Zunge als unangenehm empfinden (Klaustrophobie), sondern auch, daß bei extrem empfindlich reagierenden Patienten ein Würgereiz ausgelöst wird.

Dieselben Nachteile weisen auch weitere Kofferdamkonstruktionen auf, die jeweils im wesentlichen in Form eines entspannten Beutels in der Mundhöhle an den Zähnen fixiert werden und in DE 197 04 904 und WO 98/34559 offenbart sind. Das letztere Dokument beschreibt einen Kofferdam mit den Merkmalen des Oberbegriffs des Anspruchs 1.

Es ist Aufgabe der vorliegenden Erfindung, einen Kofferdam zur Isolierung eines Zahnes im Mund eines Patienten so auszugestalten, daß er uneingeschränkt in der zahnärztlichen Praxis anwendbar ist und die genannten Nachteile beseitigt werden.

Zur Lösung dieser Aufgabe dienen die Merkmale von Patentanspruch 1. Vorteilhafte Ausführungsformen des Kofferdams sind Gegenstand der zugehörigen Unteransprüche.

Der Grundgedanke der vorliegenden Erfindung besteht darin, daß der Kofferdam einen ringförmigen Rahmen zur Anlage an den perioralen Gesichtsbereich, ein elastisches folienartiges Abdeckmittel, das mit dem Rahmen verbindbar ist und im entspannten Zustand einen beutelförmigen Abschnitt zum Einlegen in die Mundhöhle aufweist, und ein Befestigungsmittel zur intraoralen Befestigung des Abdeckmittels aufweist, wobei das Befestigungsmittel durch ein elastisches, ringformiges und kreisförmiges Element gebildet wird, das angepaßt ist, um in elastisch verformtem Zustand in das Vestibulum eingelegt zu werden und eine Kraft auf das Abdeckmittel auszuüben, die dieses in das Vestibulum hineindrückt und darin festhält, so daß bei eingesetztem Kofferdam das Abdeckmittel in leicht gespanntem zustand zwischen dem extraoralen Rahmen und dem Befestigungsmittel im Vestibulum um die Lippen und Mundwinkel herum und intraoral im Oberkiefer und im Unterkiefer in leicht gespanntem Zustand aus dem Vestibulum heraus, über die Außenflächen und Kauflächen der Zähne und im Gaumen- und Zungenbereich auf der Ebene der Kauflächen verläuft und die Lippen, Wangen und Mundwinkel von den Zähnen weggedrückt werden sowie eine nach oben gerichtete Kraft auf den Oberkiefer und eine nach unten gerichtete Kraft auf den Unterkiefer ausgeübt wird. Die Form des beutelförmigen Abschnittes kann in weiten Grenzen variieren und eine beliebige dreidimensionale Form mit einer Öffnung aufweisen. Von dem beschriebenen Verlauf des Abdeckmittels wird nur im Bereich der zu behandelnden Zähne abgewichen, in dem das Abdeckmittel perforiert und über einen oder mehrere Zähne gezogen ist.

Der erfindungsgemäße Kofferdam besteht also aus einer passiven, einfachen Form aus einem elastischen Abdeckmittel und einem perioralen Rahmen, die mit Hilfe eines elastischen und ringförmigen, in das Vestibulum einzuspannenden Befestigungsmittels in eine dynamische Form gebracht wird, wobei die dreidimensionale Form der Mundhöhle durch eine schwache Dehnung des Abdeckmittels aufgenommen und somit Größenunterschieden und einer individuellen Anatomie Rechnung getragen wird.

Das in das Vestibulum eingesetzte ringförmige Befestigungsmittel bewirkt zusammen mit dem Abdeckmittel vorteilhaft, daß die Wangen und Mundwinkel transversal und der Ober- bzw. Unterkiefer sowie die Lippen vertikal auseinandergedrückt werden. Dazu ist das Abdeckmittel extraoral durch den perioralen Rahmen fixiert, während intraoral das ringförmige Befestigungsmittel im Vestibulum eine weitere Fixierung des Abdeckmittels bewirkt, so daß das dazwischenliegende leicht gespannte Abdeckmittel um die Lippen und Mundwinkel herum und in Anlage an diese verläuft, wodurch von dem leicht gedehnten Abdeckmittel Kräfte auf die gesamten perioralen Strukturen ausgeübt werden, die diese radial auseinanderdrücken. Das ringförmige Befestigungsmittel folgt dem Verlauf des Vestibulums vorzugsweise bis zu den hintersten Backenzähnen. Im Unterkiefer und im Oberkiefer erstreckt sich das Abdeckmittel in leicht gespanntem Zustand zwischen der Fixierung im Vestibulum über die Zahnvorderseiten und die Kauflächen der Zähne auf der Ebene der Kauflächen. Lediglich im Bereich der zu behandelnden Zähne, in dem das Abdeckmittel perforiert und über die Zähne gezogen ist, wird von diesem Verlauf abgewichen. Auf diese Weise bewirkt das sich aufgrund seiner Elastizität in das Vestibulum hineindrückende Befestigungsmittel, daß es entweder selbst unmittelbar auf die Mundschleimhaut drückend oder über das leicht gedehnte Abdeckmittel, das entsprechende Kräfte auf die Kauflächen der Zähne und auf die Lippen ausübt, oder durch ein Zusammenspiel dieser Kraftwirkungen die Kiefer auseinanderdrückt. Durch die beschriebene Anordung wird also durch das Abdeckmittel zum einen eine sphärisch nach außen gerichtete Kraft auf die Lippen und Mundwinkel übertragen, wobei die Kräftevektoren ideal angeordnet sind, um ein zirkuläres Abhalten der Lippen und Mundwinkel zu bewirken. Das ist sowohl für den Zahnarzt als auch für den Patienten vorteilhaft. So bietet es dem Zahnarzt optimale Bedingungen für alle Arten zahnärztlicher Behandlung. Durch das sanfte Auseinanderdrücken bzw. Abhalten der Lippen und Mundwinkel werden die zu behandelnden Zähne sichtbar. Trotzdem bleibt das periorale Gewebe in seiner Beweglichkeit erhalten und die Lippen und Mundwinkel je nach Behandlungsbedarf deformierbar. So erübrigen sich formstabile Schilder oder Abhalteelemente für diese Aufgabe. Da das Abdeckmittel dünn und elastisch ist, können - wenn nötig - eine Lippe oder ein Mundwinkel mit Instrumenten sogar noch weiter abgehalten werden. Ferner verschaffen die beschriebenen, die Kiefer auseinanderdrückenden Kräfte dem Patienten ein angenehmes Gefühl, weil sie ihn dabei unterstützen, den Mund zu öffnen und auch über einen langen Zeitraum problemlos geöffnet zu halten.

Bei eingesetztem Kofferdam werden die von dem ringförmigen Befestigungsmittel durch dessen Federwirkung ausgeübten Kräfte also vertikal, transversal und sagital indirekt oder im wesentlichen indirekt auf die Mundhöhle übertragen, indem er nach dem Einsetzen in das Vestibulum in dem gesamten Abdeckmittel, also der Wandung des Kofferdams, eine Spannung erzeugt. In diesem gespannten Zustand umgibt dann das nach vorne offene und zum Rachen hin geschlossene Abdeckmittel von dem extraoralen Rahmen ausgehend zirkulär die Lippen und Mundwinkel, und verläuft in das Vestibulum hinein, aus diesem wieder heraus und - mit Ausnahme der Bereiche, in denen das Abdeckmittel perforiert und über Zähne gezogen ist - über die Außen- und Kauflächen der Zähne und überdacht auf der Kauebene die Zunge und den Gaumen. Durch diesen Verlauf des Abdeckmittels wird bewirkt, daß die Lippen, Mundwinkel, Wangen und der Mund auseinandergehalten werden und sagitale Kräfte den Kofferdam durch die reziproke Verspannung zwischen der durch den perioralen Rahmen geschaffenen extraoralen Fixierung und der durch das Befestigungsmittel geschaffenen intraoralen Fixierung stabilisieren.

Bei der Verwendung des erfindungsgemäßen Kofferdams wird die Mundhöhle in ihrer maximalen Größe isoliert, so daß der größtmögliche Isolationsraum ohne störende Elemente entsteht. Die abgehaltenen Wangen, Lippen und Mundwinkel vergrößern das Vestibulum stark, das bis tief in das Vestibulum hinein zirkulär mit dem elastischen Abdeckmittel bedeckt wird und einen direkten Zugang zu den Zähnen bietet.

Indem das Abdeckmittel im Unterkiefer den Mundboden und die Zunge auf der Ebene der Kauflächen der Zähne überdeckt, verbleibt für die Zunge ein freier Raum, was für die Patienten sehr wichtig ist, da der Schluckvorgang ungehindert ausgeführt werden kann und die Zunge durch die Überdachung sanft abgehalten wird. Im Oberkiefer hat die Überdeckung des harten und weichen Gaumens auf der Ebene der Kauflächen zur Folge, daß unangenehme Mißempfindungen durch einen Kontakt zwischen Gaumen und Abdeckmittel vermieden werden und Patienten mit Würgereiz besonders Rechnung getragen wird, indem eine schonende Behandlung sichergestellt wird.

Aufgrund der nur leichten Spannung des Abdeckmittels kann dieses sowohl im Ober- als auch im Unterkiefer bei Bedarf eingedrückt werden, etwa um Platz für Sauger oder andere Instrumente zu schaffen. Durch die federnde Spannkraft des ringförmigen Befestigungsmittels, der das dehnbare Abdeckmittel gleichmäßig und zirkulär in das Vestibulum hineindrückt, wird eine Faltenbildung weitgehend vermieden.

Das Abdeckmittel wird außerdem so gehalten, daß es nach dem Lochen wie von selbst um den Zahn rutscht und durch das elastische ringförmige Befestigungsmittel nach unten gezogen wird. Im Gegensatz dazu treten bei dem vorbekannten Kofferdam, bei dem ein planes Abdeckmittel in Form eines Gummituches bis zu den seitlichen Backenzähnen gezogen wird, Zugkräfte auf, die das Abdeckmittel von dem Zahn abzuziehen versuchen, so daß breite und starke Halteklammern erforderlich sind. Es ist verständlich, daß ein der Mundhöhle nahezu angepaßtes elastisches räumliches Abdeckmittel wesentlich weniger gedehnt werden muß, als ein derartiges planes Abdeckmittel, so daß entsprechend schonendere Dehnungskräfte erzeugt werden. Durch die nur leichte Dehnung des Abdeckmittels ist es auch möglich, das Zahnfleisch zusammen mit den zu behandelnden Zähnen zu isolieren.

Die Applikation eines erfindungsgemäßen Kofferdams kann einfach und zeitsparend von einer Person ohne Instrumente mit den Händen durchgeführt werden, indem zunächst der beutelförmige Abschnitt des Abdeckmittels in den Mund des Patienten eingeführt wird. Dabei atmet der Patient kurz durch den Mund ein, so daß sich das Abdeckmittel durch den erzeugten Unterdruck in eine faltenfreie Form zieht. Anschließend wird das ringförmige Befestigungsmittel mit einer Hand vertikal elastisch zusammengedrückt und beide Enden links und rechts mit der anderen Hand festgehalten und nach hinten gezogen. Das Befestigungsmittel entspricht jetzt dem räumlichen Verlauf des Vestibulums und kann mit leichtem Schwenken seitlich nacheinander eingesetzt und vorsichtig unter die Unter- bzw. Oberlippe geführt werden. Nach dem Loslassen, springt es der Form der individuellen Anatomie entsprechend auf und fixiert das Abdeckmittel intraoral in der oben beschriebenen Art und Weise. Es ergibt sich eine sehr schöne Form, die ideale Behandlungsbedingungen bietet. Die Patienten empfinden den Kofferdam als angenehm, weil durch die Federkraft das Offenhalten des Mundes für eine längere Zeit erleichtert und nicht das halbe Gesicht abgedeckt wird. Nach dem Einsetzen des intraoralen Befestigungsmittels stabilisiert sich der Kofferdam von selbst und bleibt in vorteilhafter Weise auch stabil, wenn vom Patienten dynamische Mundbewegungen, wie Öffnen und Schließen, Seitwärtsbewegungen oder Vorwärts- und Rückwärtsbewegungen, ausgeführt werden.

In einer bevorzugten Ausführungsform besteht bei eingesetztem Kofferdam zwischen dem Befestigungsmittel und dem Abdeckmittel ein Kräftegleichgewicht, in dem das Befestigungsmittel zumindest im Bereich der Lippen von dem leicht gedehnten Abdeckmittel gestützt und von dem das Vestibulum begrenzenden Gewebe in einer Weise abgehalten wird, daß das Befestigungsmittel selbst keinen oder nur einen leichten Druck auf dieses Gewebe ausübt. Das bedeutet, daß das Befestigungsmittel in den betreffenden Bereichen aufgrund seiner Federwirkung das Abdeckmittel in das Vestibulum hineindrückt, jedoch nicht so weit, daß es zwischen der Mundschleimhaut und dem Befestigungsmittel unter Druck eingeklemmt wird. Vielmehr wird das Abdeckmittel dort von dem Befestigungsmittel im Bereich der Fixierung nur leicht an die Mundschleimhaut angelegt bzw. "schwebend" vor dieser gehalten. Auf diese Weise wird erreicht, daß die Kraftübertragung von dem Kofferdam auf Lippen, Mundwinkel, Wangen und Kiefer ausschließlich oder zumindest fast ausschließlich über das an dem Gewebe anliegende Abdeckmittel erfolgt und die Federwirkung des Befestigungsmittels über das Abdeckmittel indirekt übertragen wird. Das hat den Vorteil, daß keine wesentliche unmittelbare Kraftübertragung durch das ringförmige und zumeist dünne Befestigungsmittel auf die besonders empfindliche Mundschleimhaut stattfindet, die zu einem unangenehmen Tragegefühl und schließlich zu Druckstellen führen kann. Dieses ist insbesondere im Bereich der Lippen, also der vorderen Zähne wichtig, da dort die Gefahr besonders groß ist, daß in unangenehmer Weise ein Druck auf Mundschleimhautpartien mit knöchernder Unterlage oder sonstige empfindliche Partien ausgeübt wird. Im Bereich der Wangen hingegen kann das Befestigungsmittel das Abdeckmittel unmittelbar gegen die seitliche Schleimhaut anlegen oder drücken, wobei sich dann ein Kräftegleichgewicht zwischen dem Abdeckmittel, dem Befestigungsmittel und dem Weichgewebe ausbildet. Dabei wird das Befestigungsmittel von dem Abdeckmittel bevorzugt in der Weise gestützt, daß das Befestigungsmittel das Abdeckmittel lediglich gegen die Wangeninnenseiten und nicht gegen die Mundschleimhaut im tiefsten möglichen Verlauf des Vestibulums drückt, sondern von dieser beabstandet hält. Um das Weichgewebe im Bereich der Wangen seitlich nach außen zu drücken, sind in den meisten Fällen keine großen Kräfte erforderlich und das Gewebe ist in Hinblick auf derartige Kräfte relativ unempfindlich. In jedem Fall läßt sich erreichen, daß der vom Befestigungsmittel auf die Mundschleimhaut ausgeübte Druck nicht traumatisch ist. Stattdessen erfolgt die Kraftübertragung breitflächig und damit verteilt durch das an dem Gewebe anliegende Abdeckmittel. Dazu müssen das Abdeckmittel und das Befestigungsmittel in geeigneter Weise aufeinander abgestimmt sein. Bei dieser Abstimmung spielen eine Vielzahl unterschiedlicher Faktoren, wie die Abmessungen der beiden Komponenten und ihre mechanischen Eigenschaften eine Rolle. Die entsprechende Anpassung von Befestigungsmittel und Abdeckmittel kann aber in jedem Fall schnell und ohne weiteres durch einen Fachmann erfolgen.

In einer weiteren bevorzugten Ausführungsform ist die Öffnung des beutelförmigen Abschnittes des Abdeckmittels rund oder oval. Es ist auch vorteilhaft, wenn das der Öffnung des beutelförmigen Abschnittes des Abdeckmittels gegenüberliegende Ende rund oder oval ist. Senkrecht zur Öffnung ist der beutelförmige Abschnitt des Abdeckmittels vorzugsweise geradwandig mit parallelen oder konisch zueinander verlaufenden Seitenwänden. Während nahezu beliebige Formen denkbar und möglich sind, ist eine rationelle und billige Herstellbarkeit um so mehr gewährleistet, je einfacher die Form ist.

Weiterhin ist es vorteilhaft, wenn die Öffnung des beutelförmigen Abschnittes des Abdeckmittels größer ist als die Mundöffnung. Da der beutelförmige Abschnitt des Abdeckmittels auch in der Mundhöhle zirkulär im gespannten Zustand einen größeren Durchmesser aufweist als die Mundöffnung, werden Lippen und Mundwinkel in der oben beschriebenen Weise auseinandergehalten. Das Abdeckmittel kann den durch die Lippen und Mundwinkel verursachten längeren Weg nur mit Dehnung kompensieren.

Es ist bevorzugt, daß das Abdeckmittel vorgestanzt, vormarkiert oder beliebig perforierbar ist. Durch das Vorstanzen oder Vormarkieren wird dabei die Lage der Zähne bei eingelegtem Abdeckmittel angezeigt. Auf diese Weise oder wenn das Abdeckmittel beliebig perforierbar ist, ist es für einen Anwender leicht möglich, das Abdeckmittel über einen oder mehrere Zähne zu ziehen.

Es ist weiterhin vorteilhaft, wenn das Abdeckmittel aus Latex besteht. Derartige Abdeckmittel weisen einen hohen Dehnungskoeffizienten auf, der die erforderliche Dehnbarkeit bereitstellt.

In einer bevorzugten Ausgestaltung weist das Abdeckmittel eine oder mehrere Perforationen auf. So kann ein Perforation vorgesehen sein, die Mundatmung ermöglicht, falls bei einem Patienten die Nasenatmung behindert ist. Diese Perforation für die Mundatmung ist vorteilhaft im Gaumenbereich des Oberkiefers angeordnet. Sie stört die Behandlung nicht, weil Speichel und feuchte Schleimhaut durch das Abdeckmittel ferngehalten werden. Ferner kann eine Perforation vorgesehen sein, durch die ein Speichelzieher gesteckt und fixiert werden kann. Eine solche Perforation ist allerdings in der Regel nicht notwendig, weil der eigene Speichel, der durch das Abdeckmittel von Wasser, Blut, Chemikalien oder anderen Flüssigkeiten oder Verunreinigungen getrennt wird, wie gewohnt geschluckt werden kann. Ist eine Perforation für einen Speichelzieher vorgesehen, so ist es weiter von Vorteil, im Gaumenbereich eine weitere Perforation in dem Abdeckmittel zu bilden, damit durch diese Luft nachgesaugt werden kann und somit ein Vakuum hinter dem Abdeckmittel verbunden mit einem Anpressen des Abdeckmittels an das Innere der Mundhöhle vermieden wird.

Als Befestigungsmittel können ringförmige Elemente unterschiedlichen Durchmessers für unterschiedliche Mundgrößen vorgesehen sein. Aufgrund der Dehnungsfähigkeit des Abdeckmittels ist dieses in der Lage, die Größenunterschiede der Mundhöhle von Patienten, wie etwa von Erwachsenen mit den Löffelgrößen S, M und L, zu kompensieren und sich leicht an individuelle anatomische Unterschiede oder Besonderheiten, wie zum Beispiel eine kräftige Muskulatur, Makroglossie (zu große Zunge), eine zu kleine oder zu große Mundöffnung oder eine eingeschränkte Mundöffnung, anzupassen. Es ist aber vorteilhaft, wenn jeweils für den Patienten passende ringförmige Befestigungsmittel gewählt werden. Farblich gekennzeichnet können sie der Federkraft entsprechend innerhalb des gleichen Durchmessers markiert werden, so daß stufenlos alle Größen und Spannkräfte abgedeckt werden können. Durch die Kombination des geeignet geformten Abdeckmittels und unterschiedlicher ringförmiger Befestigungsmittel, wird ein fein abgestuftes und steuerbares System geschaffen, das allen Bedingungen gerecht werden kann.

Das ringförmige Befestigungsmittel kann aus Kunststoff, Glasfasern oder Metall hergestellt sein. Es kann einen runden, rechteckigen oder sechseckigen Querschnitt aufweisen. Das kreisförmig ausgebildete Befestigungsmittel ist leicht herstellbar.

Dabei ist es möglich, daß das ringförmige Befestigungsmittel sterilisierbar bzw. desinfizierbar und wiederverwendbar oder aber als Einmalartikel ausgebildet ist.

Darüber hinaus ist es auch vorteilhaft, wenn das ringförmige Befestigungsmittel mit einem elastischen Schlauch überzogen ist. Auf diese Weise wird ein Schutz gegen Druckstellen bereitgestellt. Ebenfalls zur Vermeidung von Druckstellen kann das ringförmige Befestigungsmittel vorteilhaft kleine Einkerbungen für die in der Mitte des Ober- und Unterkiefers angeordneten Lippenbändchen aufweisen. Im Falle der oben beschriebenen bevorzugten Ausführungsform, in der das Befestigungsmittel von dem Abdeckmittel in der Weise abgehalten wird, daß es nicht oder nur leicht an der Mundschleimhaut anliegt, sind diese Maßnahmen nicht erforderlich.

In einer bevorzugten Ausführungsform ist der Rahmen mit dem Abdeckmittel fest verbunden. Dazu kann der Rahmen bevorzugt in das Abdeckmittel eingearbeitet oder mit diesem verklebt sein. Es ist aber auch von Vorteil, wenn der Rahmen mit dem Abdeckmittel nicht fest verbunden, sondern nachträglich an diesem befestigt wird bzw. ansetzbar ist, so daß der Spannungszustand des Abdeckmittels zusätzlich dadurch gesteuert werden kann, wie der Rahmen befestigt bzw. angesetzt wird. Eine solche Steuerungsmöglichkeit kann vorteilhaft auch dadurch realisiert werden, daß der Rahmen durch einen verstellbaren Ring gebildet wird.

Der Rahmen kann vorteilhaft aus Kunststoff hergestellt sein. Es ist ferner von Vorteil, wenn der Rahmen eine leichte Begradigung oder eine Aussparung für die Nase aufweist. Weiterhin ist es vorteilhaft, wenn der Rahmen zur Gesichtsform passend anatomisch sphärisch gewölbt ist, so daß der Rahmen flach an den perioralen Gesichtsbereichen anliegen kann.

Sollen ein Zahn oder mehrere Zähne gemeinsam mit dem Zahnfleisch isoliert werden, ist es bevorzugt, wenn der Kofferdam ein Adhäsivfenster umfaßt. Dieses weist die Form eines anatomisch gebogenen Rahmens auf, der über die Zähne und auf den Alveolarfortsatz aufsetzbar ist. Zur Mundhöhle hin weist dieser Rahmen Haltemittel, etwa in Form von Krallen oder umgebogenen Rändern auf, mit denen das Abdeckmittel, das zum Beispiel im Vergleich zur bloßen Isolation eines Zahnes etwas größer perforiert oder gestanzt ist, an dem Adhäsivfenster befestigt werden kann.

Dabei ist es möglich, daß der Rahmen des Adhäsivfensters plastisch verformbar ist. In diesem Fall ist es vorteilhaft, wenn der Rahmen ein Material umfaßt, das durch Lichteinstrahlung ausgehärtet werden kann. Andererseits ist es auch möglich, daß der Rahmen elastisch ausgebildet ist, so daß das Adhäsivfenster leicht federnd über die Zähne und auf den Alveoarfortsatz aufsetzbar ist. Das Adhäsivfenster kann mit dem Abdeckmittel fest verbunden sein. Zusätzlich ist es vorteilhaft, wenn das Adhäsivfenster auf seiner Unterseite, also zur Schleimhaut und den Zähnen hin mit einem reversiblen, für feuchte Schleimhaut geeigneten Kleber und/oder auf der zur Mundhöhle hin gelegenen Seite mit einem Adhäsiv, das eine dichte Verbindung zwischen dem Adhäsivfenster und den Zähnen bzw. dem Abdeckmittel bewirkt, versehen werden kann. Es ist ferner bevorzugt, daß das Adhäsivfenster auf seiner zum Vestibulum hin gelegenen Seite Mittel aufweist, an denen das ringförmige Befestigungsmittel angreifen und dadurch das Adhäsivfenster auf den Zähnen und dem Zahnfleisch festhalten kann. Mit geeigneter Technik, wie zum Beispiel einem Kantendraht und einem zu dem Profil passendem Matrizenteil - ähnlich wie die Brackets in der Kieferorthopädie - können Kräfte auch lateral übertragen werden, die die zu Zunge und Gaumen hin gelegene Seite des Adhäsivfensters vorteilhaft schonend und dicht an die Schleimhaut andrücken. In den meisten Fällen genügt aber das vestibuläre Festhalten des Adhäsivfensters gegen die abziehenden Kräfte des Abdeckmittels durch das ringförmige Befestigungsmittel, weil das System nur mit schwach gedehntem Abdeckmittel funktioniert.

Gelocht oder mit Adhäsivfenster ist der erfindungsgemäße Kofferdam, der sehr einfach und damit preisgünstig herzustellen ist, für alle Behandlungen an Zähnen oder Zahnfleisch geeignet. Selbst Extraktionen oder Implantate können ungehindert und medizinisch korrekt in abgedecktem Zustand durchgeführt werden.

Die Erfindung wird im folgenden anhand von Ausführungsbeispielen, die in den Zeichnungen dargestellt sind, näher erläutert.
- Figur 1: zeigt eine perspektivische Ansicht eines mit einem Rahmen verbundenen Abdeckmittels.
- Figur 2: zeigt eine Aufsicht auf ein ringförmiges elastisches Befestigungsmittel.
- Figur 3: zeigt eine teilweise geschnittene Ansicht des Unter- kiefers nach der Applikation eines erfindungsgemäßen Kofferdams.
- Figur 4: zeigt eine teilweise geschnittene Ansicht des Unter- kiefers nach dem Einlegen des Abdeckmittels in die Mundhöhle und vor dem Einsetzen des Befestigungsmittels in das Vestibulum.
- Figur 5: zeigt einen Medianschnitt durch die Mundhöhle nach der Applikation eines erfindungsgemäßen Kofferdams.
- Figur 6: zeigt einen Querschnitt der Mundhöhle nach der Applika- tion eines erfindungsgemäßen Kofferdams, wobei dieser im Oberkiefer links und rechts gelocht und über einen Zahn gezogen ist.
- Figur 7: zeigt eine Ansicht des Kopfes eines Patienten nach der Applikation eines erfindungsgemäßen Kofferdams.
- Figur 8: zeigt eine perspektivische Ansicht eines Adhäsivfen- sters.
- Figur 8a: zeigt eine perspektivische Ansicht des Adhäsivfensters aus Figur 8 nach der Befestigung des Abdeckmittels.
- Figur 9: zeigt eine Schnittansicht des Adhäsivfensters entlang der Linie IX-IX aus Figur 8.
- Figur 10: zeigt eine Schnittansicht des Adhäsivfensters entlang der Linie X-X aus Figur 8.

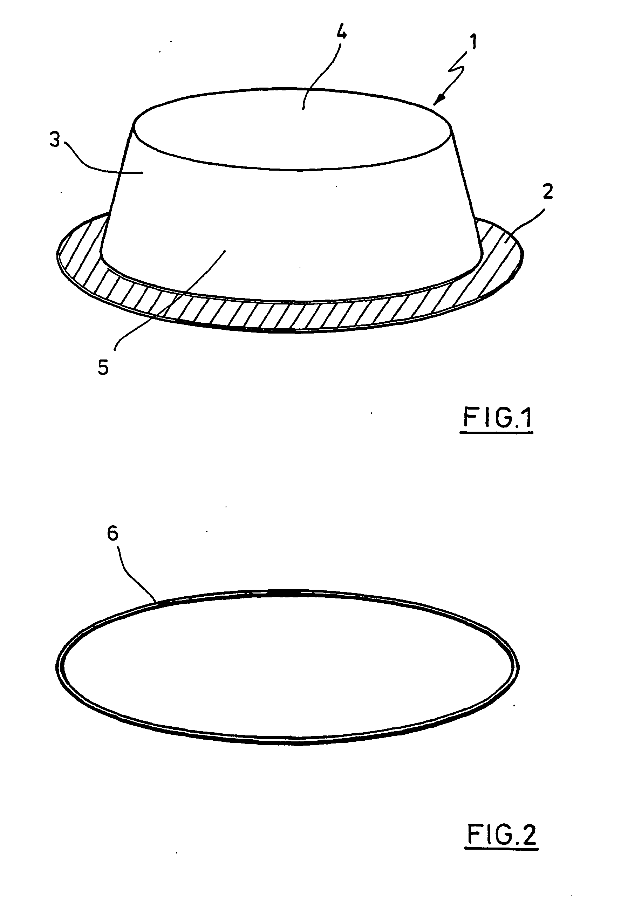

Das in Figur 1 in perspektivischer Ansicht dargestellte Abdeckmittel 1 wird durch ein dünnes, flexibles und elastisches folienartiges Material gebildet und ist an seinem Rand mit einem Rahmen 2 verbunden. Das Abdeckmittel 1 ist zusammen mit dem Rahmen 2 im wesentlichen hutförmig und weist einen beutelförmigen Abschnitt 3 auf. Dieser Abschnitt 3 ist in seiner äußeren Form kegelstumpfförmig ausgebildet, mit einer runden Öffnung (nicht gezeigt), einem runden Bodenteil 4 und einer zu diesem hin zusammenlaufenden Seitenwand 5. Figur 2 zeigt ein ringförmiges Befestigungsmittel in Form eines kreisförmigen, elastischen Ringes 6.

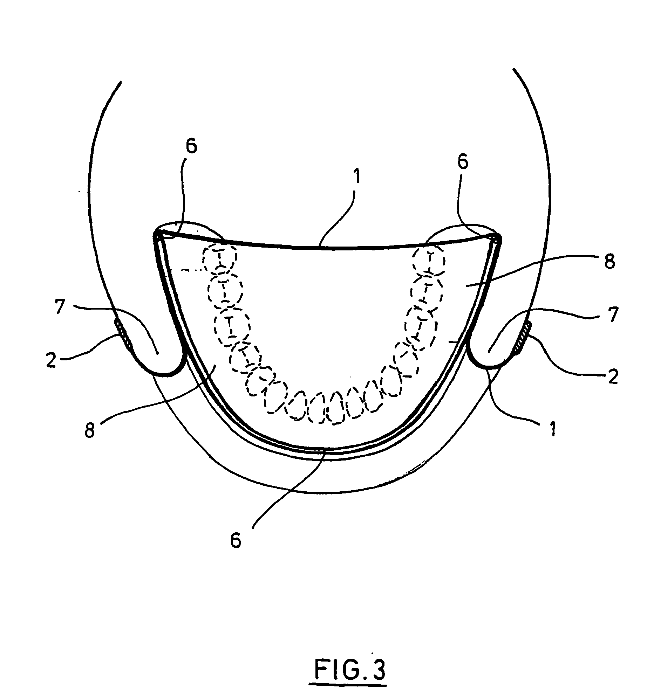

Um nun den Kofferdam in der Mundhöhle eines Patienten zu befestigen, wird zunächst der beutelförmige Abschnitt 3 des Abdeckmittels 1 in den Mund des Patienten eingeführt und der Rahmen 2 um den Mund herum an die perioralen Gesichtsbereiche angelegt. Anschließend wird der Ring 6 derart elastisch zusammengedrückt, daß er in das Vestibulum eingesetzt werden kann und zwar entlang seines gesamten Verlaufes bis hin zu den hintersten Backenzähnen. Nach dem Loslassen, preßt er sich aufgrund seiner Elastizität selbst in das Vestibulum hinein, wodurch er das Abdeckmittel 1 im Ober- und im Unterkiefer entlang des gesamten Vestibulums in dieses hineindrückt und darin festhält und fixiert. Dabei wird das Abdeckmittel 1 gedehnt und verläuft sowohl zwischen dem extraoralen Rahmen 2 und dem Vestibulum als auch intraoral in leicht gespanntem Zustand. Aus Figur 3, die eine Ansicht des Unterkiefers nach dem Einsetzen des Kofferdams in den Mund zeigt, ist ersichtlich, daß das Abdeckmittel 1 von dem am Gesicht anliegenden Rahmen 2 entlang der Gesichtshaut um die Mundwinkel und Lippen 7 herum und intraoral im Vestibulum 8 verläuft. Der ins Vestibulum 8 eingespannte Ring 6 drückt zusammen mit dem Abdeckmittel 1 Ober- und Unterkiefer vertikal und Wangen und Mundwinkel transveral auseinander.

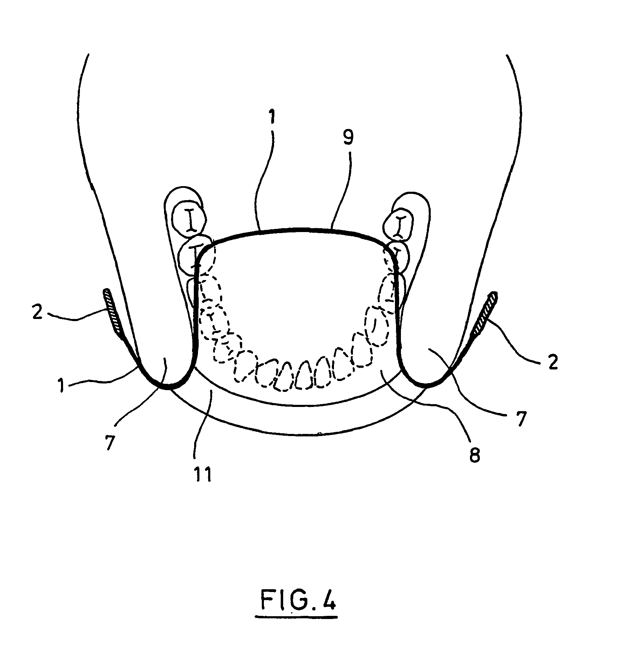

Figur 4 zeigt eine Ansicht des Unterkiefers nach dem Einlegen des beutelförmigen Abschnittes 3 des Abdeckmittels 1 in die Mundhöhle eines Patienten und vor dem Einsetzen des Ringes 6 in das Vestibulum 8. Figur 4 zeigt also im Vergleich zu Figur 3 die Form 9 des in entspanntem Zustand in der Mundhöhle angeordneten Abdeckmittels 1 bevor es mit Hilfe des Ringes 6 in die leicht gedehnte Form (Figur 3) gebracht wird und das Vestibulum 8 aufdehnt. Das Abdeckmittel 1 ist derart ausgebildet ist, daß die Öffnung des beutelförmigen Abschnittes 3 größer ist als die Mundöffnung 11. Gleichzeitig sind die Abmessungen des beutelförmigen Abschnitts 3 so gewählt, daß er in entspanntem Zustand kleiner ist als der zu isolierende Raum der Mundhöhle. Im vorliegenden Fall ist die Tiefe des Abschnittes 3 im entspannten Zustand kleiner als der Abstand zwischen den Lippen und dem hintersten Punkt des Vestibulums im Bereich der Backenzähne, und der Durchmesser des Abschnittes 3 ist geringer als der Abstand zwischen den Vestibulumsabschnitten im Bereich der Seitenzähnen des Unterkiefers bzw. des Oberkiefers. Wichtig ist jedenfalls, daß die Abmessungen der entspannten Form 9 so gewählt sind, daß nach dem Einsetzen des Ringes 6 ins Vestibulum das Abdeckmittel 1 unabhängig von der genauen Mundgröße nur leicht gedehnt wird, also bei einem kleinen Mund eine genügende Wandspannung verbleibt, um ein Einsaugen durch einen Sauger zu verhindern, und bei einem großen Mund auch bei der dann erforderlichen stärkeren Dehnung keine traumatischen Kräfte auftreten. Das Abdeckmittel kann unter Berücksichtigung dieser Faktoren in Standardgrößen hergestellt werden, zum Beispiel für Kinder und für Erwachsene.

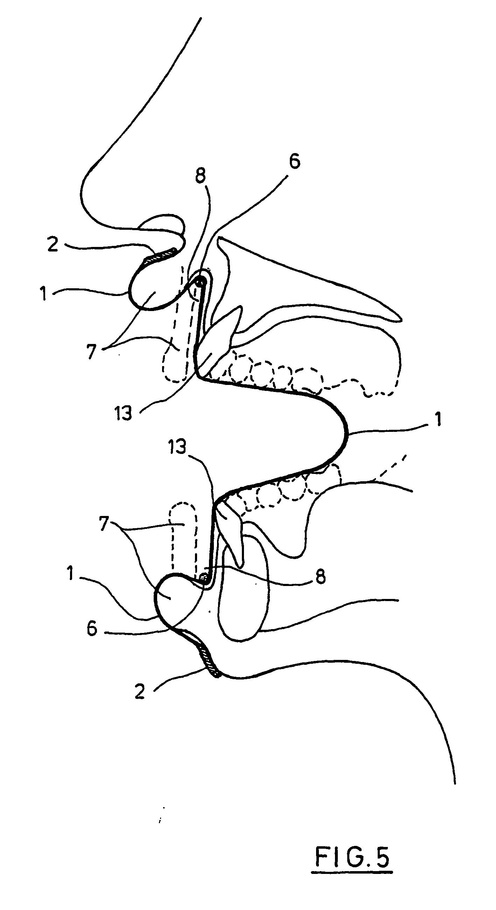

Der Vergleich zwischen den Figuren 3 und 4 veranschaulicht die Differenz zwischen dem von dem entspannten Abdeckmittel 9 eingenommenen Raum und dem nach dem Einsetzen des Ringes 6 erreichten größeren Isolationsraum. Diese Differenz muß das Abdeckmittel 1 durch Dehnung kompensieren, wodurch es in eine leicht gespannte Form gebracht wird. Da das Abdeckmittel 1 wie beschrieben nicht anatomisch formgerecht und mit ausreichenden Materialreserven für die kleinere Mundöffnung ausgebildet ist, ist ersichtlich, daß das Abdeckmittel 1 in gespanntem Zustand um die Mundwinkel und Lippen 7 herum verläuft, weil das Abdeckmittel 1 den durch die Mundwinkel und Lippen 7 verursachten längeren Weg nur mit Dehnung kompensieren kann. Wie in Figur 5 dargestellt, bewirkt das in gespanntem Zustand um die Mundwinkel und Lippen 7 herumgeführte Abdeckmittel 1, daß die Lippen 7 und Mundwinkel sphärisch auseinandergehalten werden. Dadurch kann das Abdeckmittel 1 neben der Barrierefunktion noch die wichtige Aufgabe des zirkulären Abhaltens des perioralen Gewebes erfüllen.

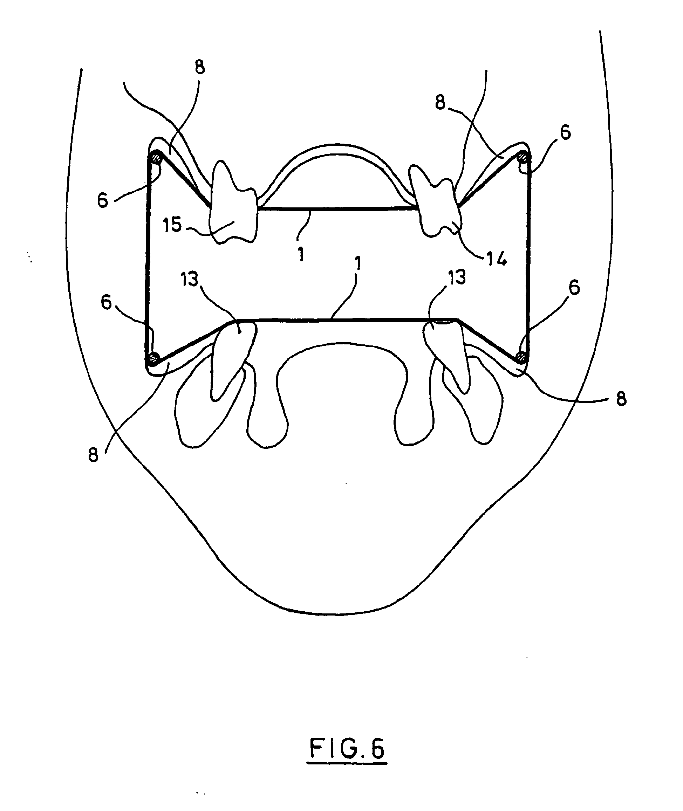

Neben Figur 5 zeigt insbesondere Figur 6, daß das Abdeckmittel 1 intraoral aus dem Vestibulum 8 heraus, über die Vorderseiten der Zähne 13 und deren Kauflächen verläuft. Im Gaumen- bzw. Zungenbereich erstreckt sich das Abdeckmittel 1 in leicht gespanntem Zustand auf der Ebene der Kauf lächen der Zähne 13, so daß Zunge und Gaumen nicht berührt werden. Lediglich im Bereich von zu isolierenden Zähnen 14, 15 verläßt das Abdeckmittel diese Ebene.

Darüber hinaus ist in den Figuren 5 und 6 dargestellt, daß der Ring 6 das Abdeckmittel 1 nur so weit in das Vestibulum 8 hineindrückt, daß das Abdeckmittel 1 nicht im tiefsten Punkt des Vestibulums 8 zwischen dem Ring 6 und der Mundschleimhaut festgeklemmt wird. Vielmehr "schwebt" der Ring 6 im Bereich der Lippen im Vestibulum 8 und wird vom Abdeckmittel 1 derart gestützt, daß er keinen unmittelbaren Druck auf das Gewebe ausübt (siehe Figur 5), und verläuft im Bereich der Wangen von der Mundschleimhaut im tiefstmöglichen Verlauf beabstandet (siehe Figur 6). Das wird dadurch erreicht, daß die Federwirkung des Ringes 6 und die Dehnbarkeit des Abdeckmittels 1 in geeigneter Weise aneinander angepaßt sind. Wie aus Figur 6 ersichtlich ist, drückt der Ring 6 das Abdeckmittel 1 lediglich im Bereich der Wangen unmittelbar seitlich gegen die Mundschleimhaut und damit zusammen mit dem Abdeckmittel 1 die Wangen auseinander. In diesem Bereich, in dem sich ein Kräftegleichgewicht zwischen dem Ring 6, dem Abdeckmittel 1 und dem Weichgewebe einstellt, ist der Druck aber nicht so kritisch, da es sich um Weichgewebe handelt, das sich leicht nach außen drücken läßt und aufgrund fehlender knöchernder Unterlage relativ unempfindlich ist. Der in Figur 6 dargestellte vertikale Verlauf des Abdeckmittels 1 zwischen den durch den Ring 6 bewirkten Fixierungen im Oberkiefer und im Unterkiefer kann je nach der Beschaffenheit der Wangen auch nicht gerade, sondern aufgrund des Gegendruckes des Weichgewebes leicht zu den Zähnen hin nach innen gewölbt sein.

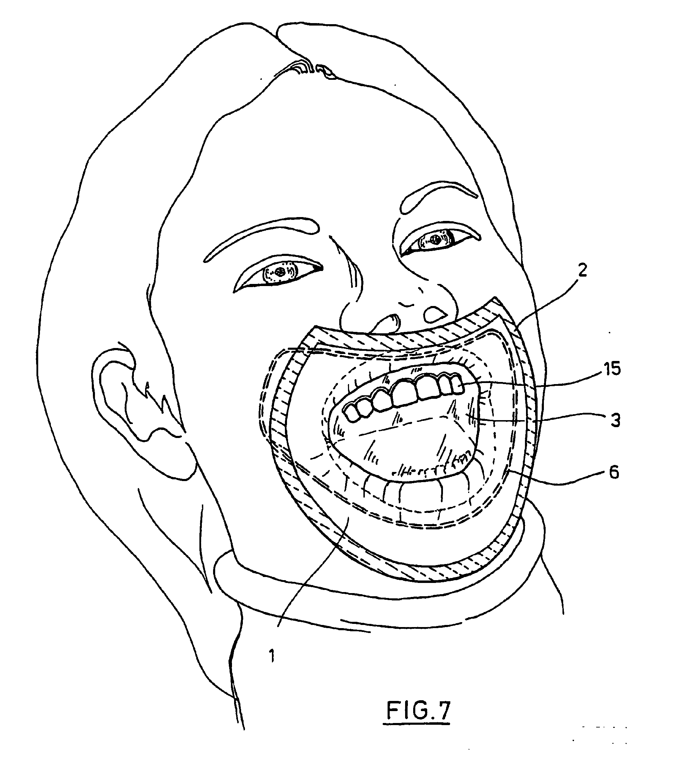

In Figur 7 ist der Kopf eines Patienten nach der Applikation des Kofferdams gezeigt. Durch die Dehnung des Abdeckmittels 1 und die fixierenden Elemente 2 und 6 stabilisiert sich der Kofferdam nach dem Einsetzen des intraoralen Befestigungsmittels 6 von selbst. Wird bei der Applikation festgestellt, daß der Ring 6 zu groß oder zu klein ist, kann er schnell durch einen anderen ersetzt werden. Wesentlich ist, daß dieser dünne Ring 6 fast unsichtbar in einer Zone liegt, die für den Behandler nicht störend ist, und dennoch die passive Form 9 des Abdeckmittels 1 zu einer leicht gespannten Umhüllung des Isolationsraumes und aus der Mundhöhle ein angenehmes Operationsfeld macht.

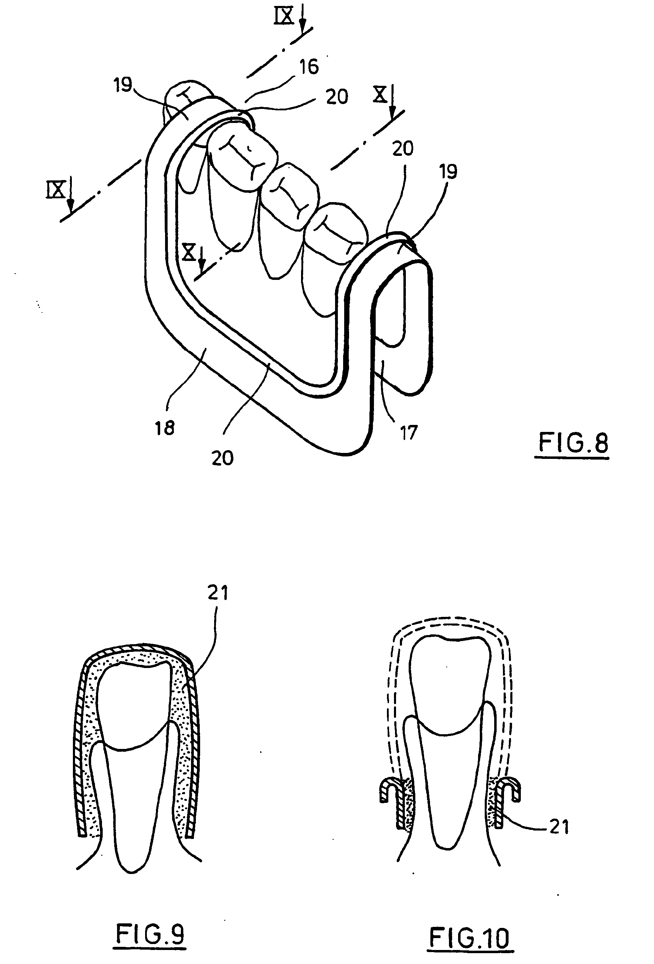

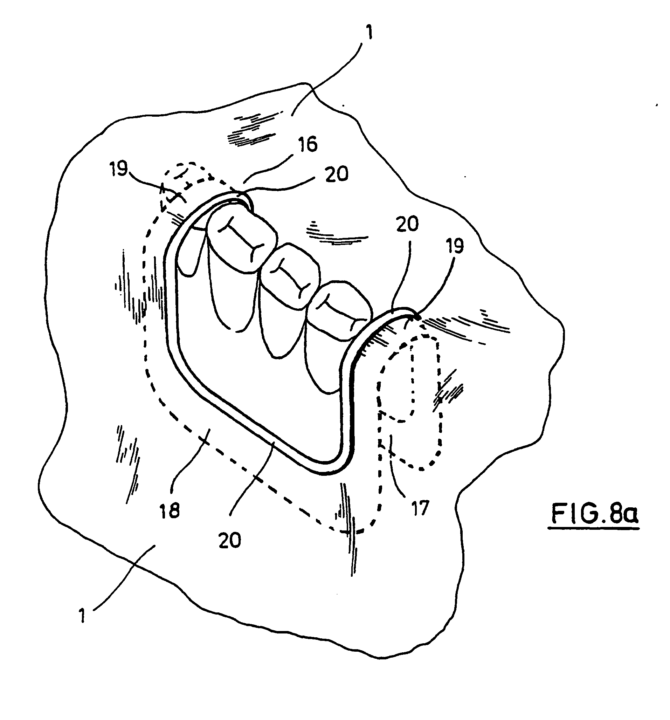

In Figur 8 ist ein Adäsivfenster 16 dargestellt, das eingesetzt wird, wenn ein Zahn oder mehrere Zähne gemeinsam mit dem Zahnfleisch isoliert werden sollen. Das Adhäsivfenster 16 weist zwei seitliche und parallel zueinander verlaufende Abschnitte 17, 18 auf, die an ihren Enden durch zwei bogenförmig verlaufende Abschnitte 19 miteinander verbunden sind. Die Abmessungen sind so gewählt, daß das Adhäsivfenster 16 als anatomisch geformter Rahmen in der Weise mit den Bogen 19 über die Zähne und den seitlichen Abschnitten 17, 18 auf den Alveolarfortsatz aufgesetzt werden kann, daß zwischen den Bogen 19 des Fensters 16 ein oder mehrere Zähne sowie einen Teil des angrenzenden Zahnfleisches frei zugänglich sind.

Aus Figur 9, die einen Schnitt durch das auf die Zähne aufgesetzte Adhäsivfenster 16 entlang der Linie IX-IX aus Figur 8 zeigt, ist ersichtlich, daß das Adhäsivfenster 16 an seiner den Zähnen zugewandten Seite mit einem Adhäsiv 21 versehen ist, so daß eine sichere und dichte Verbindung zwischen dem Adhäsivfenster 16 und den Zähnen bzw. dem Zahnfleisch gewährleistet ist.

An dem innerhalb des durch das Adhäsivfenster 16 abgegrenzten Bereich liegenden Rand der Rahmenabschnitte 17, 18, 19 sind Krallen 20 vorgesehen, die durch umgebogene Bereiche der Rahmenabschnitte 17, 18, 19 gebildet sind und an denen das Abdeckmittel 1 befestigt werden kann. Das ist in Figur 10 dargestellt, die einen Schnitt durch das auf die Zähne aufgesetzte Adhäsivfenster 16 entlang der Linie X-X aus Figur 8 zeigt. Diese Krallen 20 können entlang der gesamten inneren Ränder der Rahmenabschnitte 17, 18, 19 vorgesehen sein. Zur Befestigung des Abdeckmittels 1 an dem Adhäsivfenster 16 wird das Abdeckmittel 1 perforiert und derart über das Adhäsivfenster gelegt, daß die Ränder der Perforation von den Krallen 20 erfaßt und die Perforation in aufgedehntem Zustand gehalten wird (siehe Figur 8a). Es ist aber auch möglich, daß die Krallen 20 lediglich an den inneren Rändern der horizontalen Rahmenabschnitte 17, 18 vorgesehen sind und die Abdichtung entlang der Bogenabschnitte 19 dadurch erfolgt, daß sich das Abdeckmittel in gespanntem Zustand an diese anlegt. In diesem Fall können die Bogenabschnitte 19 auf ihrer Oberfläche auch mit einem Adhäsiv versehen sein, das diese Abdichtung unterstützt.

## Patentansprüche

1. Kofferdam zur Isolierung eines Zahnes oder mehrerer Zähne im Mund eines Patienten mit einem ringförmigen Rahmen (2) zur Anlage an den perioralen Gesichtsbereich, einem elastischen folienartigen Abdeckmittel (1), das mit dem Rahmen (2) verbindbar ist und im entspannten Zustand einen beutelförmigen Abschnitt (3) zum Einlegen in die Mundhöhle aufweist, und einem Befestigungsmittel (6) zur intraoralen Befestigung des Abdeckmittels (1), **dadurch gekennzeichnet**, das Befestigungsmittel (6) durch ein einziges elastisches ringförmiges und kreisförmiges Element (6) gebildet wird, das angepaßt ist, um in elastisch verformtem Zustand in das Vestibulum (8) eingelegt zu werden und eine Kraft auf das Abdeckmittel (1) auszuüben, die dieses in das Vestibulum (8) hineindrückt und darin festhält, so daß bei eingesetztem Kofferdam das Abdeckmittel (1) in leicht gespanntem Zustand zwischen dem extraoralen Rahmen (2) und dem Befestigungsmittel (6) im Vestibulum (8) um die Lippen (7) und Mundwinkel herum und intraoral oben und unten in leicht gespanntem Zustand aus dem Vestibulum (8) heraus, über die Außenflächen und Kauflächen der Zähne und im Gaumen- und Zungenbereich auf der Ebene der Kauflächen verläuft und die Lippen, Wangen und Mundwinkel von den Zähnen weggedrückt sowie eine nach oben gerichtete Kraft auf den Oberkiefer und eine nach unten gerichtete Kraft auf den Unterkiefer ausgeübt wird.

2. Kofferdam nach Anspruch 1, **dadurch gekennzeichnet, daß** sich bei eingesetztem Kofferdam zwischen dem Abdeckmittel (1) und dem Befestigungsmittel (6) ein Kräftegleichgewicht herausbildet, in dem das Befestigungsmittel (6) von dem leicht gespannten Abdeckmittel (1) so gestützt wird, daß sich das Befestigungsmittel (6) zumindest im Bereich der Lippen nicht oder nur leicht gegen das das Vestibulum begrenzende Gewebe preßt und die Kraftübertragung von dem Kofferdam auf Lippen, Mundwinkel, Wangen und Kiefer über das Abdeckmittel (1) erfolgt.

3. Kofferdam nach Anspruch 1 oder 2, **dadurch gekennzeichnet, daß** die Öffnung des beutelförmigen Abschnittes (3) des Abdeckmittels (1) rund oder oval ist.

4. Kofferdam nach einem der vorhergehenden Ansprüche, **dadurch gekennzeichnet, daß** das der Öffnung des beutelförmigen Abschnittes (3) des Abdeckmittels (1) gegenüberliegende Ende rund oder oval ist.

5. Kofferdam nach einem der vorhergehenden Ansprüche, **dadurch gekennzeichnet, daß** der beutelförmige Abschnitt (3) des Abdeckmittels (1) geradwandig oder konisch ist.

6. Kofferdam nach einem der vorhergehenden Ansprüche, **dadurch gekennzeichnet, daß** die Öffnung des beutelförmigen Abschnittes (3) des Abdeckmittels (1) größer ist als die Mundöffnung (11).

7. Kofferdam nach einem der vorhergehenden Ansprüche, **dadurch gekennzeichnet, daß** das Abdeckmittel (1) vorgestanzt, vormarkiert oder beliebig perforierbar ist.

8. Kofferdam nach einem der vorhergehenden Ansprüche, **dadurch gekennzeichnet, daß** das Abdeckmittel (1) aus Latex besteht.

9. Kofferdam nach einem der vorhergehenden Ansprüche, **dadurch gekennzeichnet, daß** das Abdeckmittel (1) eine Perforation aufweist, um Mundatmung zu ermöglichen.

10. Kofferdam nach Anspruch 9, **dadurch gekennzeichnet, daß** die Perforation für die Mundatmung im Gaumenbereich des Oberkiefers angeordnet ist.

11. Kofferdam nach Anspruch 9, **dadurch gekennzeichnet, daß** die Perforation für die Mundatmung im Bereich des Unterkiefers angeordnet ist.

12. Kofferdam nach einem der vorhergehenden Ansprüche, **dadurch gekennzeichnet, daß** das Abdeckmittel (1) eine Perforation für einen Speichelzieher aufweist.

13. Kofferdam nach Anspruch 12, **dadurch gekennzeichnet, daß** das Abdeckmittel (1) eine Perforation zum Nachsaugen von Luft aufweist.

14. Kofferdam nach einem der vorhergehenden Ansprüche, **dadurch gekennzeichnet, daß** als Befestigungsmittel (6) ringförmige Elemente unterschiedlichen Durchmessers für unterschiedliche Mundgrößen vorgesehen sind.

15. Kofferdam nach einem der vorhergehenden Ansprüche, **dadurch gekennzeichnet, daß** das ringförmige Befestigungsmittel (6) einen runden, rechteckigen oder sechseckigen Querschnitt aufweist.

16. Kofferdam nach einem der vorhergehenden Ansprüche, **dadurch gekennzeichnet, daß** das ringförmige Befestigungsmittel (6) aus Kunststoff, Glasfasern oder Metall hergestellt ist.

17. Kofferdam nach einem der vorhergehenden Ansprüche, **dadurch gekennzeichnet, daß** das ringförmige Befestigungsmittel (6) sterilisierbar bzw. desinfizierbar und wiederverwendbar ist.

18. Kofferdam nach einem der Ansprüche 1 bis 16, **dadurch gekennzeichnet, daß** das ringförmige Befestigungsmittel (6) als Einmalartikel hergestellt ist.

19. Kofferdam nach einem der vorhergehenden Ansprüche, **dadurch gekennzeichnet, daß** das ringförmige Befestigungsmittel (6) mit einem elastischen Schlauch überzogen ist.

20. Kofferdam nach einem der vorhergehenden Ansprüche, **dadurch gekennzeichnet, daß** das ringförmige Befestigungsmittel (6) kleine Einkerbungen für die Lippenbändchen aufweist.

21. Kofferdam nach einem der vorhergehenden Ansprüche, **dadurch gekennzeichnet, daß** der Rahmen (2) mit dem Abdeckmittel (1) fest verbunden ist.

22. Kofferdam nach Anspruch 21, **dadurch gekennzeichnet, daß** der Rahmen (2) in das Abdeckmittel (1) eingearbeitet oder mit diesem verklebt ist.

23. Kofferdam nach einem der vorhergehenden Ansprüche, **dadurch gekennzeichnet, daß** der Rahmen (2) aus Kunststoff hergestellt ist.

24. Kofferdam nach einem der vorhergehenden Ansprüche, **dadurch gekennzeichnet, daß** der Rahmen (2) eine leichte Begradigung oder eine Aussparung für die Nase aufweist.

25. Kofferdam nach einem der vorhergehenden Ansprüche, **dadurch gekennzeichnet, daß** der Rahmen (2) ein verstellbarer Ring ist.

26. Kofferdam nach einem der vorhergehenden Ansprüche, **dadurch gekennzeichnet, daß** der Rahmen (2) zur Gesichtsform passend anatomisch sphärisch gewölbt ist, so daß der Rahmen flach anliegen kann.

27. Kofferdam nach einem der vorhergehenden Ansprüche, **dadurch gekennzeichnet, daß** der Kofferdam ein Adhäsivfenster (16) zur gemeinsamen Isolation von Zähnen und Zahnfleisch in Form eines anatomisch gebogenen Rahmens (17, 18, 19) umfaßt, der über die Zähne und auf den Alveolarfortsatz aufsetzbar ist und auf der von den Zähnen abgewandten Seite Haltemittel (20) aufweist, mit denen das Abdeckmittel (1) an dem Adhäsivfenster (16) befestigt werden kann.

28. Kofferdam nach Anspruch 27, **dadurch gekennzeichnet, daß** der Rahmen (17, 18, 19) plastisch verformbar ist.

29. Kofferdam nach Anspruch 28, **dadurch gekennzeichnet, daß** der Rahmen (17, 18, 19) ein Material umfaßt, das durch Lichteinstrahlung ausgehärtet werden kann.

30. Kofferdam nach Anspruch 27, **dadurch gekennzeichnet, daß** der Rahmen (17, 18, 19) elastisch ausgebildet ist, so daß das Adhäsivfenster (16) leicht federnd über die Zähne und auf den Alveolarfortsatz aufsetzbar ist.

31. Kofferdam nach einem der Ansprüche 27 bis 30, **dadurch gekennzeichnet, daß** das Adhäsivfenster (16) zur Schleimhaut und den Zähnen hin mit einem reversiblen, für feuchte Schleimhaut geeigneten Kleber versehen werden kann.

32. Kofferdam nach einem der Ansprüche 27 bis 31, **dadurch gekennzeichnet, daß** die Haltemittel (20) Krallen oder umgebogene Ränder sind.

33. Kofferdam nach einem der Ansprüche 27 bis 32, **dadurch gekennzeichnet, daß** das Adhäsivfenster (16) mit dem Abdeckmittel (1) fest verbunden ist.

34. Kofferdam nach einem der Ansprüche 27 bis 33, **dadurch gekennzeichnet, daß** das Adhäsivfenster (16) zum Vestibulum (8) hin Mittel (21) aufweist, durch die das ringförmige Befestigungsmittel (6) das Adhäsivfenster (16) auf den Zähnen festhalten kann.

35. Kofferdam nach einem der Ansprüche 27 bis 34, **dadurch gekennzeichnet, daß** das Adhäsivfenster (16) auf der zur Mundhöhle hin gelegenen Seite mit einem Adhäsiv versehen werden kann, das eine dichte Verbindung mit dem Abdeckmittel (1) bewirkt.

## Claims

1. Rubber dam for the isolation of a tooth or several teeth in a patient's mouth having an annular frame (2) for resting against the perioral facial area, an elastic film-like covering means (1) which can be connected to the frame (2) and in an unstressed state has a bag-shaped section (3) for insertion into the oral cavity, and a fastening means (6) for the intraoral fastening of the covering means (1), **characterized in that** the fastening means (6) is formed by a single elastic annular and circular element (6) which is adapted in order to be inserted in an elastically deformed state into the vestibule (8) and to exert a force on the covering means (1) which pushes this into the vestibule (8) and firmly holds it therein, so that, when the rubber dam is inserted, the covering means (1) extends in a slightly stressed state between the extraoral frame (2) and the fastening means (6) in the vestibule (8) around the lips (7) and the corners of the mouth and intraorally at the top and bottom in a slightly stressed state out of the vestibule (8), over the external surfaces and chewing surfaces of the teeth and in the palate and tongue area on the plane of the chewing surfaces, and the lips, cheeks and corners of the mouth are pushed away from the teeth and an upwardly directed force is exerted on the upper jaw and a downwardly directed force is exerted on the lower jaw.

2. Rubber dam according to claim 1, **characterized in that** when the rubber dam is inserted, there forms between the covering means (1) and the fastening means (6) an equilibrium of forces in which the fastening means (6) is supported by the slightly stressed covering means (1) such that the fastening means (6) at least in the area of the lips does not press or only lightly presses against the tissue bordering the vestibule and the transfer of force takes place from the rubber dam to the lips, the corners of the mouth, the cheeks and the jaws via the covering means (1).

3. Rubber dam according to claim 1 or 2, **characterized in that** the opening of the bag-shaped section (3) of the covering means (1) is round or oval.

4. Rubber dam according to any of the preceding claims, **characterized in that** the end lying opposite the opening of the bag-shaped section (3) of the covering means (1) is round or oval.

5. Rubber dam according to any of the preceding claims, **characterized in that** the bag-shaped section (3) of the covering means (1) is straight-walled or conical.

6. Rubber dam according to any of the preceding claims, **characterized in that** the opening of the bag-shaped section (3) of the covering means (1) is larger than the mouth opening (11).

7. Rubber dam according to any of the preceding claims, **characterized in that** the covering means (1) is pre-stamped, pre-marked or can be perforated as desired.

8. Rubber dam according to any of the preceding claims, **characterized in that** the covering means (1) consists of latex.

9. Rubber dam according to any of the preceding claims, **characterized in that** the covering means (1) has a perforation in order to enable breathing through the mouth.

10. Rubber dam according to claim 9, **characterized in that** the perforation for breathing through the mouth is arranged in the palate area of the upper jaw.

11. Rubber dam according to claim 9, **characterized in that** the perforation for breathing through the mouth is arranged in the area of the lower jaw.

12. Rubber dam according to any of the preceding claims, **characterized in that** the covering means (1) has a perforation for a saliva ejector.

13. Rubber dam according to claim 12, **characterized in that** the covering means (1) has a perforation for subsequent suction of air.

14. Rubber dam according to any of the preceding claims, **characterized in that** annular elements of different diameters are provided as fastening means (6) for different mouth sizes.

15. Rubber dam according to any of the preceding claims, **characterized in that** the annular fastening means (6) has a round, rectangular or hexagonal cross-section.

16. Rubber dam according to any of the preceding claims, **characterized in that** the annular fastening means (6) is made of plastic, glass fibres or metal.

17. Rubber dam according to any of the preceding claims, **characterized in that** the annular fastening means (6) is sterilizable or disinfectable and reusable.

18. Rubber dam according to any of claims 1 to 16, **characterized in that** the annular fastening means (6) is produced as a disposable article.

19. Rubber dam according to any of the preceding claims, **characterized in that** the annular fastening means (6) is covered by an elastic tube.

20. Rubber dam according to any of the preceding claims, **characterized in that** the annular fastening means (6) has small notches for the lip frenulums.

21. Rubber dam according to any of the preceding claims, **characterized in that** the frame (2) is fixedly connected to the covering means (1).

22. Rubber dam according to claim 21, **characterized in that** the frame (2) is incorporated into the covering means (1) or glued to this.

23. Rubber dam according to any of the preceding claims, **characterized in that** the frame (2) is made of plastic.

24. Rubber dam according to any of the preceding claims, **characterized in that** the frame (2) has a slight straightening or a recess for the nose.

25. Rubber dam according to any of the preceding claims, **characterized in that** the frame (2) is an adjustable ring.

26. Rubber dam according to any of the preceding claims, **characterized in that** the frame (2) is anatomically spherically curved to fit the shape of the face, so that the frame can lie flat.

27. Rubber dam according to any of the preceding claims, **characterized in that** the rubber dam comprises an adhesive window (16) for the joint isolation of teeth and gums in the shape of an anatomically curved frame (17, 18, 19) which can be placed over the teeth and onto the alveolar process and, on the side facing away from the teeth, has retaining means (20) with which the covering means (1) can be fastened to the adhesive window (16).

28. Rubber dam according to claim 27, **characterized in that** the frame (17, 18, 19) is plastically deformable.

29. Rubber dam according to claim 28, **characterized in that** the frame (17, 18, 19) comprises a material which can be cured by light irradiation.

30. Rubber dam according to claim 27, **characterized in that** the frame (17, 18, 19) is developed to be elastic such that the adhesive window (16) can be placed slightly resiliently over the teeth and onto the alveolar process.

31. Rubber dam according to any of claims 27 to 30, **characterized in that** the adhesive window (16) can be provided, facing the mucous membrane and the teeth, with a reversible glue suitable for moist mucous membrane.

32. Rubber dam according to any of claims 27 to 31, **characterized in that** the retaining means (20) are claws or bent-back edges.

33. Rubber dam according to any of claims 27 to 32, **characterized in that** the adhesive window (16) is fixedly connected to the covering means (1).

34. Rubber dam according to any of claims 27 to 33, **characterized in that** the adhesive window (16), facing the vestibule (8), has means (21) through which the annular fastening means (6) can retain the adhesive window (16) on the teeth.

35. Rubber dam according to any of claims 27 to 34, **characterized in that** the adhesive window (16) can be provided on the side facing the oral cavity with an adhesive which effects a tight connection with the covering means (1).

## Revendications

1. Digue dentaire pour isoler une ou plusieurs dents dans la bouche d'un patient et qui comporte un cadre (2) annulaire à appliquer sur la zone périorale du visage, un moyen de couverture (1) élastique en forme de feuille, qui peut être reliée au cadre (2) et qui présente à l'état détendu une partie (3) en forme de poche à introduire dans la cavité buccale et, un moyen de fixation (6) pour fixer le moyen de couverture (1) à l'intérieur de la bouche, cette digue dentaire étant **caractérisée en ce que** le moyen de fixation est constitué par un élément (6) unique, élastique, en forme d'anneau circulaire, qui est adapté pour être introduit, à l'état élastiquement déformé, dans le vestibule (8) et pour exercer sur le moyen de couverture (1) une force qui pousse celui-ci dans le vestibule (8) et l'y maintient de sorte que quand la digue dentaire est installée, le moyen de couverture (1) se trouve à l'état légèrement tendu entre le cadre extra oral (2) et le moyen de fixation (6) dans le vestibule (8) autour des lèvres (7) et du coin de la bouche et, intra oralement, en haut et en bas sort du vestibule (8) à l'état légèrement tendu pour s'étendre sur les surfaces externes et sur les surfaces de mastication des dents et dans la zone du palais et de la langue sur le plan des surfaces de mastication, en écartant des dents les lèvres, les joues et le coin de la bouche et en exerçant sur la mâchoire supérieure une force dirigée vers le haut et sur la mâchoire inférieure une force dirigée vers le bas.

2. Digue dentaire selon la revendication 1, **caractérisée en ce que** quand elle est placée entre le moyen de couverture (1) et le moyen de fixation (6) il s'établit un équilibrage des forces dans lequel le moyen de fixation (6) est soutenu par le moyen de couverture (1) légèrement tendu de sorte que le moyen de fixation (6), au moins dans la zone des lèvres est appliqué sans pression ou seulement avec une faible pression sur le vestibule et que la transmission des forces de la digue aux lèvres, au coin de la bouche, aux joues et aux mâchoires est assurée par le moyen de couverture (1).

3. Digue dentaire selon la revendication 1 ou 2, **caractérisée en ce que** l'ouverture de la partie (3), en forme de poche, du moyen de couverture (1) est ronde ou ovale.

4. Digue dentaire selon une des revendications précédentes, **caractérisée en ce que** l'extrémité située à l'opposé de la partie (3), en forme de poche, du moyen de couverture (1) est ronde ou ovale.

5. Digue dentaire selon une des revendications précédentes, **caractérisée en ce que** la partie (3), en forme de poche, du moyen de couverture (1) a une paroi droite ou conique.

6. Digue dentaire selon une des revendications précédentes, **caractérisée en ce que** l'ouverture de la partie (3), en forme de poche, du moyen de couverture (1) est plus grande que l'ouverture de la bouche (11).

7. Digue dentaire selon une des revendications précédentes, **caractérisée en ce que** le moyen de couverture (1) est prédécoupé, prémarqué et peut être perforé à volonté.

8. Digue dentaire selon une des revendications précédentes, **caractérisée en ce que** le moyen de couverture (1) est en latex.

9. Digue dentaire selon une des revendications précédentes, **caractérisée en ce que** le moyen de couverture (1) présente une perforation pour permettre la respiration par la bouche.

10. Digue dentaire selon la revendication 9, **caractérisée en ce que** la perforation pour permettre la respiration par la bouche se trouve dans la zone du palais de la mâchoire supérieure.

11. Digue dentaire selon la revendication 9, **caractérisée en ce que** la perforation pour permettre la respiration par la bouche se trouve dans la zone de la mâchoire inférieure.

12. Digue dentaire selon une des revendications précédentes, **caractérisée en ce que** le moyen de couverture (1) présente une perforation pour un extracteur de salive.

13. 3 Digue dentaire selon la revendication 12, **caractérisée en ce que** le moyen de couverture (1) présente une perforation pour l'aspiration de l'air.

14. Digue dentaire selon une des revendications précédentes, **caractérisée en ce que** comme moyen de fixation (6) sont prévus des éléments annulaires de différents diamètres pour des grandeurs de bouche différentes.

15. Digue dentaire selon une des revendications précédentes, **caractérisée en ce que** le moyen de fixation (6) annulaire présente une section ronde, rectangulaire ou hexagonale.

16. Digue dentaire selon une des revendications précédentes, **caractérisée en ce que** le moyen de fixation (6) annulaire est en matière plastique, en fibres de verre ou en métal.

17. Digue dentaire selon une des revendications précédentes, **caractérisée en ce que** le moyen de fixation (6) annulaire peut être stérilisé ou désinfecté et réutilisé.

18. Digue dentaire selon une des revendications 1 à 16, **caractérisée en ce que** le moyen de fixation (6) annulaire est un article jetable.

19. Digue dentaire selon une des revendications précédentes, **caractérisée en ce que** le moyen de fixation (6) est recouvert d'un tube élastique.

20. Digue dentaire selon une des revendications précédentes, **caractérisée en ce que** le moyen de fixation (6) présente des petites rainures pour les petits ligaments des lèvres.

21. Digue dentaire selon une des revendications précédentes, **caractérisée en ce que** le cadre (2) est solidaire du moyen de couverture (1).

22. Digue dentaire selon la revendication 21, **caractérisée en ce que** le cadre (2) est incorporé au moyen de couverture (1) ou collé à celui-ci.

23. Digue dentaire selon une des revendications précédentes, **caractérisée en ce que** le cadre (2) est fabriqué en matière plastique.

24. Digue dentaire selon une des revendications précédentes, **caractérisée en ce que** le cadre (2) présente une légère rectification ou un évidement pour le nez.

25. Digue dentaire selon une des revendications précédentes, **caractérisée en ce que** le cadre (2) est un anneau réglable.

26. Digue dentaire selon une des revendications précédentes, **caractérisée en ce que** le cadre (2) est bombé sphériquement pour s'adapter anatomiquement à la forme du visage, de sorte qu'il peut s'appliquer à plat.

27. Digue dentaire selon une des revendications précédentes, **caractérisée en ce que** la digue dentaire présente, pour isoler à la fois les dents et les gencives, une fenêtre adhésive (16) sous la forme d'un cadre (17, 18, 19) à courbure anatomique, qui peut être placé sur les dents et sur l'appendice alvéolaire et qui présente du côté éloigné des dents des moyens de maintien (20) permettant de fixer le moyen de couverture (1) sur la fenêtre adhésive (16).

28. Digue dentaire selon la revendication 27, **caractérisée en ce que** le cadre (17, 18, 19) peut se déformer plastiquement.

29. Digue dentaire selon la revendication 28, **caractérisée en ce que** le cadre (17, 18, 19) comprend un matériau qui peut être durci par radiation incidente de lumière.

30. Digue dentaire selon la revendication 27, **caractérisée en ce que** le cadre (17, 18, 19) est élastique, de sorte que la fenêtre adhésive (16) peut être posée avec un léger effet élastique sur les dents et sur l'appendice alvéolaire.

31. Digue dentaire selon une des revendications 27 à 30, **caractérisée en ce que** le cadre (17, 18, 19) est élastique, de sorte que la fenêtre adhésive (16) peut, du côté de la muqueuse et des dents, être garnie d'une colle réversible, appropriée à la muqueuse humide.

32. Digue dentaire selon une des revendications 27 à 31, **caractérisée en ce que** les moyens de maintien (20) sont des griffes ou des bords recourbés.

33. Digue dentaire selon une des revendications 27 à 32, **caractérisée en ce que** la fenêtre adhésive (16) est solidaire du moyen de couverture (1).

34. Digue dentaire selon une des revendications 27 à 33, **caractérisée en ce que** la fenêtre adhésive (16) présente en direction du vestibule (8) des moyens (21) par lesquels le moyen de fixation (6) annulaire peut fixer la fenêtre adhésive (16) sur les dents.

35. Digue dentaire selon une des revendications 27 à 34, **caractérisée en ce que** la fenêtre adhésive (16), sur son côté situé vers la cavité buccale, peut être équipée d'un adhésif assurant une liaison étanche avec les moyens de couverture.
